# EUROPEAN PATENT SPECIFICATION

(11) **EP 0 746 484 B1**
(45) Date of publication and mention of the grant of the patent: **01.07.1998**
(21) Application number: 95909600.9
(22) Date of filing: 28.02.1995
(51) Int. Cl.: B60S 13/00, B60B 11/10

(54) **WHEEL REPLACEMENT DOLLY FOR HEAVY VEHICLES**
RADERSATZWAGEN FÜR LASTKRAFTWAGEN
ROUE SERVANTE DESTINEE A REMPLACER LES ROUES DE VEHICULES

(30) Priority: 03.03.1994 US 205179
(43) Date of publication of application: 11.12.1996
(73) Proprietor: Fiddis, Eric, Burnaby British Columbia V5J 2W2 (CA); Fiddis, Christopher, Vancouver, British Columbia V5S 3M7 (CA)
(72) Inventor: FIDDIS, Eric, Burnaby, British Columbia V5J 2W2 (CA); FIDDIS, Christopher, Vancouver, British Columbia V5S 3M7 (CA); BOGACZEWICZ, Kazimierz, George, Surrey, British Columbia V3R 9E4 (CA)
(74) Representative: Sanders, Peter Colin Christopher
(86) International application number: CA9500100
(87) International publication number: WO9523716

(56) References cited:
- US-A- 1 650 031
- US-A- 3 756 616
- US-A- 5 127 638
- US-A- 5 180 177

## Description

### BACKGROUND OF THE INVENTION

This invention relates to dollies for replacing seized wheels, typically on heavy vehicles.

Wheel seizure on a vehicle can occur when a rear axle becomes locked, for example due to wheel bearing failure, a locked differential or because of an accident. Towing is not always possible, particularly for rear axles because of the difficulty of lifting certain vehicles from the rear. This is particularly true for articulating buses which cannot be picked up from either the front or the rear due to the turntable mechanism located near the center of the bus. Most large vehicles with one or more rear axles conventionally must be loaded onto flat bed vehicles for transport to a repair garage.

It would be desirable to provide some means for easily towing such vehicles to a repair location or allowing them to be driven under their own power despite a seized wheel.

Devices for this general purpose have been suggested in the past, such as in United States Patent US-A-1,650,031 to Nash. This patent discloses a combination dolly and jack. The dolly has two wheels and is attached to the axle of the vehicle and fits under the tire.

United States Patent US-A-1,681,665 to Haynes shows an emergency wheel for vehicles. A smaller wheel takes some of the weight off a damaged wheel instead of replacing it.

United States Patent US-A-4,629,388 to Riemer shows a towing aid for vehicles. This device is intended for use on rail bound vehicles.

However, such earlier devices are often not well adapted for replacing seized wheels on heavy vehicles such as buses, particularly articulating buses. In some instances they are too difficult to install. In other cases they are not sturdy enough, or would not provide enough stability, to be driven relatively long distances in place of the conventional wheel.

### SUMMARY OF THE INVENTION

It is an object of the invention to provide an improved device for easily driving or towing a heavy vehicle, such as a bus, to a repair location with a seized wheel.

It is also an object of the invention to provide an improved device for allowing heavy vehicles with seized wheels to be towed or driven which is simple and rugged in construction.

It is another object of the invention to provide an improved wheel replacement dolly which is easy to install using only conventional tools such as wrenches and jacks.

It is a further object of the invention to provide an improved wheel replacement dolly for heavy vehicles which provides enough support and stability so the vehicle can be driven for significant distances to a repair location.

It is a still further object of the invention to provide an improved wheel replacement dolly which supports a seized axle the same distance above the ground as the conventional wheel and tire.

It is a still further object of the invention to provide an improved wheel replacement dolly which does not extend further from the side of the vehicle than the wheel well.

In accordance with these objects, there is provided a wheel replacement dolly for heavy vehicles as defined in the preamble of claim 1 and of the type disclosed in US-A-5 127 638, characterised in that four stub axles are connected to the bottom of the frame, one stub axle extending from each side of the frame at each of the said ends;
each stub axle having one of the said wheels mounted thereon such that the frame lies between the pairs of wheels with the annular flange vertically above the bottom of the frame when the wheels are on a horizontal surface.

Further developments in line with claim 1 are referred to in the dependent claims 2 to 5. In accordance with another object of the invention, there is also provided a vehicle as defined in claim 6.

Compared to some earlier devices of this general type, the invention offers significant advantages. For one thing, it can be installed on one side of a disabled vehicle which can then be driven under its own power. The device can also be installed on both sides of a vehicle. The vehicle must be towed if the device is on both ends of the drive axle.

Wheel replacement dollies according to the invention can be easily installed in place of the conventional wheel on the existing wheel hub. It can be mounted on the front of the vehicle as well as the rear.

The invention allows disabled vehicles to be driven safely even up to highway speeds of 80 km/h.

### BRIEF OF DESCRIPTION OF THE DRAWINGS

In drawings which illustrate embodiments of the invention:
Fig. 1 is a perspective view of a wheel replacement dolly according to an embodiment of the invention shown installed on the wheel hub of a vehicle, the vehicle being shown in fragment;
Fig. 2 is a sectional view taken along line 2-2 of Fig. 1;
Fig. 3 is a front view of the annular flange and adapter flange for adapting the replacement dolly for different size wheels; and
Fig. 4 is a perspective view of a brake drum and a brake drum cradle attachment for the dolly.

### DESCRIPTION OF THE PREFERRED EMBODIMENTS

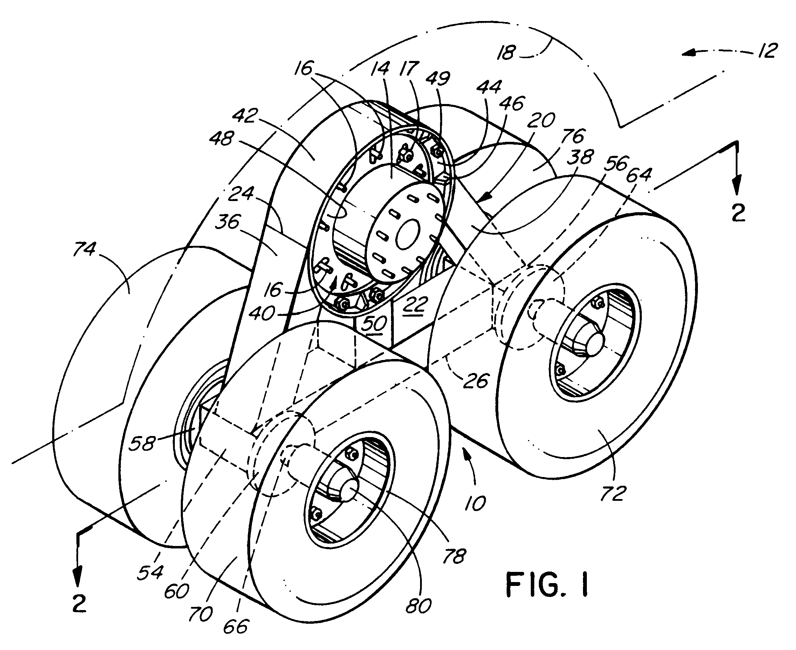

Referring to the drawings, and first to Fig. 1, these show a replacement dolly generally at 10 which is intended for use on a heavy vehicle 12 such as a bus. The vehicle is conventional and has at least four wheels, each being provided with a wheel hub 14 which is conventional in design, having a plurality of spaced-apart threaded studs 16, normally used to secure the wheel rim to the hub. Each wheel is located in this example in a wheel well 18, again according to the conventional arrangement.

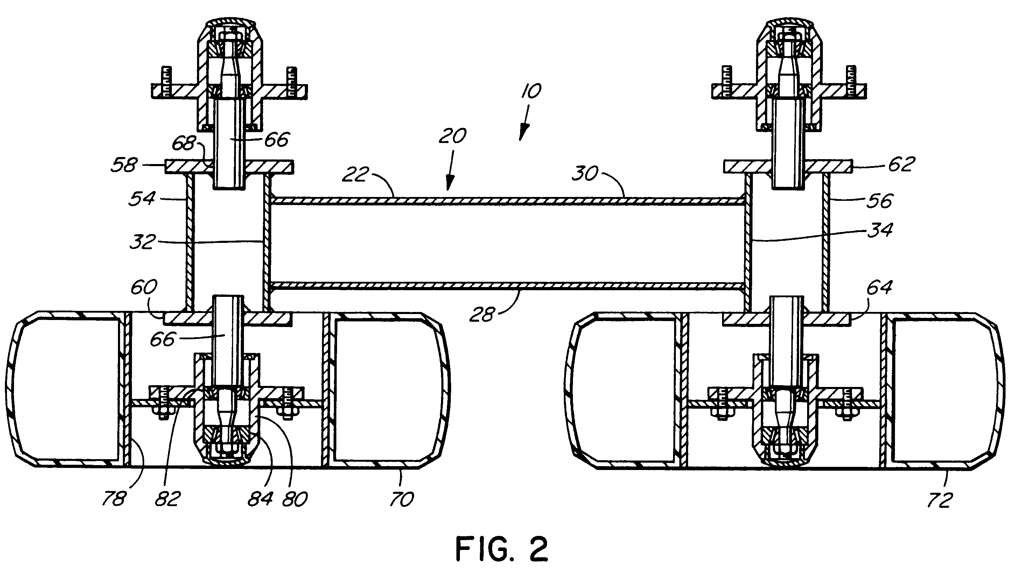

However, Fig. 1 shows the dolly 10 installed in place of the usual rim equipped with a rubber tire. The dolly has a triangular frame 20 having a top 24 and a bottom 26 as shown in Fig. 1, and a first side 28 and a second side 30 shown in Fig. 2. There is a bottom member 22 extending along the bottom 26. In this embodiment the bottom member is a box section, having a first end 32 and a second end 34.

The frame also has two side members 36 and 38 which extend upwardly from the ends of the bottom member towards the top 24 of the frame. These members are also box sections in this embodiment.

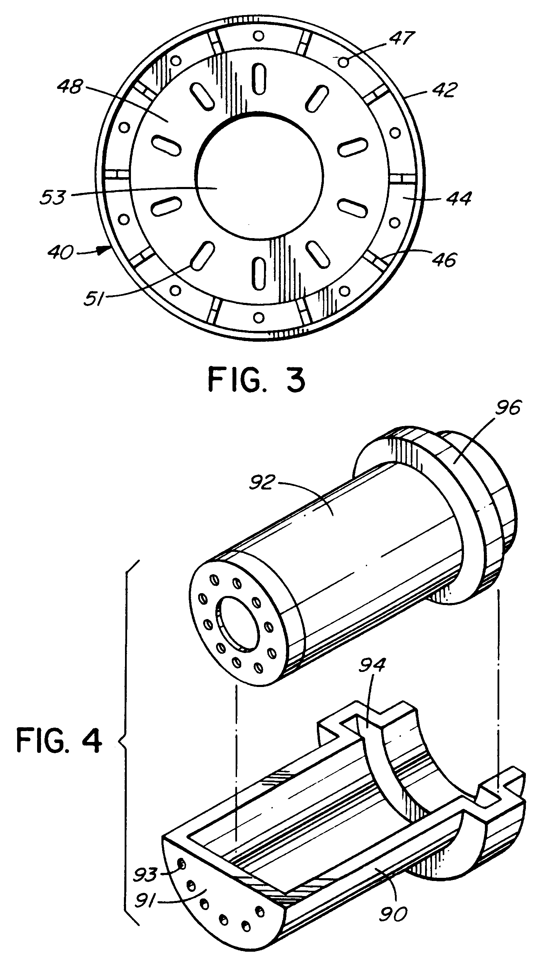

An annular flange 40, shown in Fig. 1 and Fig. 3, is connected to the top of the frame and is supported thereby. The flange includes an outer cylindrical band 42 and an annular disk 44 inside the band and connected thereto. A plurality of gussets 46 are spaced-apart circumferentially about the inside of the band and the outer periphery of the disk and are connected to both. The disk has a plurality of spaced-apart bolt holes 47 arranged in a circle as shown in Fig. 3. An adapter flange 48 is connected to the flange 40 by a plurality of nuts and bolts 49 extending through the bolt holes 47 and corresponding holes in the adapter flange. The adapter flange is fitted against the annular flange from behind the latter from the point of view of Fig. 1 and 3. The adapter flange has radially elongated bolt apertures 51, which are spaced apart circumferentially thereabout, and a large central aperture 53 for receiving wheel hub 14 as shown in Fig. 3. The studs 16 of the hub extend through the apertures 51. Nuts 17 are fitted on the studs, only one of which is shown in Fig. 1. The elongated apertures 51 allow the dolly to fit a variety of wheels having different diameters between the wheels studs.

The frame 20 of this embodiment also includes a vertical support member 50 which extends between the bottom of the annular flange 40 and the top of the bottom member 22 as seen in Fig. 1. This member helps distribute the load over the entire member 22.

There are short box sections 54 and 56 at the ends 32 and 34 of the bottom member 22 respectively. These members extend perpendicularly with respect to the bottom member to each side 28 and 30 of the frame. Plates 58 and 60 are connected to the ends of box section 54. These plates are round in this embodiment. Similar plates 62 and 64 are connected to the ends of box section 56.

A stub axle 66 is connected to each of the plates as illustrated for plate 58. There is an aperture 68 in each of the plates for receiving the stub axle. In this embodiment all of the connections between the frame members, the annular flange and components thereof and the stub axles are welded. However it should be understood that other conventional connections could be substituted including various fasteners. Furthermore, the shape of the frame and the types of components used are not critical and could be altered by someone skilled in the art.

The dolly 10 has four wheels including two outside wheels 70 and 72 and two inside wheels 74 and 76, all of which are shown in Fig. 1. The wheels are all the same and include a rim 78 and a hub 80 as shown for wheel 70 in Fig. 1 and 2. As seen in Fig. 2, each wheel hub has interior roller bearings 82 and 84 and are conventional in design. The roller bearings serve as means for rotatably mounting the wheels on the stub axles 66. The outer wheels 70 and 72 are positioned so they extend outwardly from the vehicle the same distance as the conventional wheel and within the wheel well 18 in this example.

In an alternative embodiment the adapter flange 48 is deleted. The annular flange 40 and its bolt holes 47 are then dimensioned to fit a particular wheel.

An operation, if some problem is encountered which prevents normal rotation of a wheel on the vehicle 12, the axle of the vehicle is jacked up to raise the wheel off the ground. The wheel is then removed in the conventional manner by unthreading the nuts received on studs 16 and pulling off the wheel. The dolly can easily be slipped in position over the hub 14 and the nuts put back in place to secure the dolly in position. In many cases the vehicle can then be driven back to a repair location, even if the disabled wheel is a drive wheel. If so, the differential allows the wheel on the opposite side of the vehicle to power it back to the repair location.

In some instances, for example if the studs 16 are sheared, it may not be possible to bolt the wheel to the dolly as described above. In this instance a brake drum cradle 90, shown in Fig. 4, is utilized. The cradle is a hollow semi-cylinder with a semi-circular flange 91 at one end. The flange has a plurality of bolt holes 93 which are used to connect the cradle to the dolly by means of its bolt apertures 51. The cradle has a channel 94. Brake drum 92 of a vehicle is lowered onto the cradle so its flange 96 rests in the channel.

## Claims

1. A wheel replacement dolly (10) for heavy vehicles, comprising:
a triangular frame (20) supported on two pairs of wheels (70, 72; 74, 76) and having two sides (28, 30), a top (24), and a bottom (26) with two ends (32, 34); and
an annular flange (40) at the top (24) of the frame (20), the flange having a plurality of spaced-apart bolt holes (47, 51); characterised in that
four stub axles (66) are connected to the bottom (26) of the frame (20), one stub axle (66) extending from each side (28, 30) of the frame at each of the said ends (32, 34);
each stub axle (66) having one of the said wheels (70, 72, 74, 76) mounted thereon such that the frame (20) lies between the pairs of wheels (70, 72; 74, 76) with the annular flange (40) vertically above the bottom (26) of the frame when the wheels are on a horizontal surface.

2. A dolly as claimed in claim 1, wherein the frame (20) has two side members (36, 38) extending between the respective ends (32, 34) of the bottom (26) and the flange (40).

3. A dolly as claimed in claim 1 or claim 2, wherein the bolt holes (47, 51) include holes (51) in the form of radially elongate slots.

4. A dolly as claimed in claim 3 wherein an adapter flange (48) is connected to the annular flange (40), the adapter flange including the radially elongate slots (51).

5. A dolly as claimed in any one of the preceding claims further comprising a semi-cylindrical hollow cradle (90) connected to the annular flange (40) and configured to receive a brake drum (92) of a vehicle.

6. A vehicle (12) having a plurality of wheel hubs (14), each hub having a plurality of circumferentially spaced-apart bolts (16), at least one of the hubs (14) being fitted with a replacement dolly (10) having two pairs of wheels (70, 72; 74, 76) and including a frame (20) having a top (24) and a bottom (26), the top (24) of the frame (20) further comprising an annular flange (40) having a plurality of circumferentially spaced-apart bolt holes (47, 51) receiving the said bolts (16), characterised in that
the two pairs of dolly wheels (70, 72; 74, 76) are rotatably mounted on the bottom (26) of the frame such that the frame lies between the two pairs of dolly wheels and the bottom (26) of the frame is vertically aligned with the annular flange (40) when the dolly wheels are on a horizontal surface.

## Patentansprüche

1. Radersatzwagen (10) für Schwerfahrzeuge, umfassend:
einen dreieckigen Rahmen (20), der auf zwei Paaren von Rädern (70, 72; 74, 76) gelagert ist und zwei Seiten (28, 30), ein Oberteil (24) und ein Unterteil (26) mit zwei Enden (32, 34) aufweist, und einen Ringflansch (40) an dem Oberteil (24) des Rahmens (20), wobei der Flansch eine Mehrzahl von mit Abstand zueinander angeordneten Bolzenlöchern (47, 51) aufweist, dadurch gekennzeichnet, daß vier Achszapfen (66) mit dem Unterteil (26) des Rahmens (20) verbunden sind, wobei von jeder Seite (28, 30) des Rahmens an jedem der Enden (32, 34) ein Achszapfen (66) ausgeht, wobei an jedem Achszapfen (66) eines der Räder (70, 72, 74, 76) derart angebracht ist, daß der Rahmen (20) zwischen den Paaren von Rädern (70, 72; 74, 76) liegt, wobei der Ringflansch (40) vertikal über dem Unterteil (26) des Rahmens angeordnet ist, wenn die Räder auf einer horizontalen Fläche angeordnet sind.

2. Wagen nach Anspruch 1, worin der Rahmen (20) zwei Seitenelemente (36, 38) aufweist, die sich zwischen den jeweiligen Enden (32, 34) des Unterteils (26) und dem Flansch (40) erstrecken.

3. Wagen nach Anspruch 1 oder 2, worin die Bolzenlöcher (47, 51) Löcher (51) in Form radial ausgedehnter Schlitze umfassen.

4. Wagen nach Anspruch 3, worin ein Adapterflansch (48) mit dem Ringflansch (40) verbunden ist, wobei der Adapterflansch die radial ausgedehnten Schlitze (51) aufweist.

5. Wagen nach einem der vorangehenden Ansprüche, ferner umfassend ein halbzylindrisches hohles Muldenteil (90), das mit dem Ringflansch (40) verbunden und zur Aufnahme einer Bremstrommel (92) eines Fahrzeugs ausgebildet ist.

6. Fahrzeug (12) mit einer Mehrzahl Radnaben (14), wobei jede Nabe eine Mehrzahl von in Umfangsrichtung mit Abstand zueinander angeordneten Bolzen (16) aufweist, wobei wenigstens eine der Naben (14) mit einem Ersatzwagen (10) versehen ist, der zwei Paare von Rädern (70, 72; 74, 76) aufweist und einen Rahmen (20) mit einem Oberteil (24) und einem Unterteil (26) umfaßt, wobei das Oberteil (24) des Rahmens (20) ferner einen Ringflansch (40) mit einer Mehrzahl von mit Abstand in Umfangsrichtung zueinander angeordneten Bolzenlöchern (47, 51) aufweist, welche die Bolzen (16) aufnehmen, dadurch gekennzeichnet, daß zwei Paare von Wagenrädern (70, 72; 74, 76) an dem Unterteil (26) des Rahmens drehbar derart gelagert sind, daß der Rahmen zwischen den beiden Paaren von Wagenrädern liegt und das Unterteil (26) des Rahmens mit dem Ringflansch (40) vertikal ausgerichtet ist, wenn die Wagenräder auf einer horizontalen Fläche angeordnet sind.

## Revendications

1. Chariot de remplacement de roue (10) pour poids lourds, comprenant :
un châssis triangulaire (20) monté sur deux paires de roues (70, 72 ; 74, 76) et comportant deux côtés (28, 30), un sommet (24), et une base (26) présentant deux extrémités (32, 34) ; et
un flasque annulaire (40) au sommet (24) du châssis (20), le flasque comportant une pluralité de trous de passage de goujon espacés (47, 51) ; caractérisé en ce que
quatre fusées (66) sont fixées à la base (26) du châssis (20), une fusée (66) s'étendant à partir de chaque côté (28, 30) du châssis au niveau de chacune desdites extrémités (32, 34) ;
chaque fusée (66) comportant l'une desdites roues (70, 72, 74, 76) montée sur celle-ci de sorte que le châssis (20) s'étend entre les paires de roues (70, 72 ; 74, 76), le flasque annulaire (40) s'étendant verticalement au-dessus de la base (26) du châssis lorsque les roues reposent sur une surface horizontale.

2. Chariot selon la revendication 1, dans lequel le châssis (20) comporte deux éléments latéraux (36, 38) s'étendant entre les extrémités respectives (32, 34) de la base (26) et le flasque (40).

3. Chariot selon la revendication 1 ou la revendication 2, dans lequel les trous de passage de goujon (47, 51) comprennent des trous (51) sous la forme de fentes radialement allongées.

4. Chariot selon la revendication 3, dans lequel un flasque d'adaptation (48) est fixé au flasque annulaire (40), le flasque d'adaptation comprenant les fentes radialement allongées (51).

5. Chariot selon l'une quelconque des revendications précédentes, comprenant en outre un berceau creux semi-cylindrique (90) fixé au flasque annulaire (40) et configuré de façon à recevoir un tambour de frein (92) d'un véhicule.

6. Véhicule (12) comportant une pluralité de moyeux de roue (14), chaque moyeu comportant une pluralité de goujons espacés suivant la circonférence (16), au moins l'un des moyeux (14) étant équipé d'un chariot de remplacement (10) comportant deux paires de roues (70, 72 ; 74, 76) et comprenant un châssis (20) ayant un sommet (24) et une base (26), le sommet (24) du châssis (20) comprenant en outre un flasque annulaire (40) présentant une pluralité de trous de passage de goujon espacés suivant la circonférence (47, 51), recevant lesdits goujons (16), caractérisé en ce que
les deux paires de roues du chariot (70, 72 ; 74, 76) sont montées rotatives sur la base (26) du châssis de façon que le châssis s'étende entre les deux paires de roues du Chariot et que la base (26) du châssis soit alignée verticalement avec le flasque annulaire (40) lorsque les roues du Chariot reposent sur une surface horizontale.
